# EUROPEAN PATENT APPLICATION

(11) **EP 4 432 425 A2**
(43) Date of publication of application: **18.09.2024**
(21) Application number: 24163983.0
(22) Date of filing: 15.03.2024
(51) Int. Cl.: H01M 10/613, H01M 10/6554, H01M 10/6556, H01M 10/6568, H01M 50/209, H01M 50/289, H01M 50/293

(54) **BATTERY BOX, BATTERY PACK AND ENERGY STORAGE CONTAINER**

(30) Priority: 16.03.2023 CN 202320543686 U; 31.05.2023 CN 202321370416 U; 26.01.2024 CN 202420203107 U
(71) Applicant: REPT BATTERO Energy Co., Ltd., 325000 Wenzhou Zhejiang (CN); Shanghai Ruipu Energy Co., Ltd., Shanghai 201206 (CN)
(72) Inventor: CAO, Hui, Longwan District, Wenzhou, Zhejiang, (CN); LIU, Si, Pudong New District. Shanghai (CN); YU, Chen, Pudong New District, Shanghai (CN); DAI, Hua, Longwan District, Wenzhou, Zhejiang, (CN); TAO, Chao, Pudong New District, Shanghai (CN); ZHAO, Qi, Pudong New District, Shanghai (CN)
(74) Representative: Potter Clarkson

(57) **Abstract**

The present application provides a battery box, battery pack and energy storage container. The battery box comprises: a bottom plate and a frame, the bottom plate and the frame together form an installation cavity, the bottom plate is provided with a number of cooling flow channels, and the cooling flow channels are used for circulating cooling medium; a coolant-converging-channel, at least one end of the bottom plate is provided with the coolant-converging-channel, the coolant-converging-channel is located inside or outside the installation cavity, and the coolant-converging-channel connects to the bottom plate and is interconnected to the cooling flow channels. The battery box, battery pack and energy storage container of the present application can achieve uniform heat dissipation of the battery module, convenient for thermal management inside the battery pack and improving battery safety.

## Description

### Technical Field

The present application mainly relates to the technical field of battery, and in particular to battery box, battery pack and energy storage container.

### Background

During the charging and discharging process of the energy storage battery box, in order to solve the problem of thermal runaway of the battery cell, the battery system needs to have a certain cooling function, and the integrated liquid cooling of the lower battery box has become the mainstream in the market, which can not only satisfy the cooling of the battery system, but also plays a load-bearing role for the battery module.

In order to improve the energy density of the battery pack, some existing battery packs have technical solutions that integrate liquid cooling flow channels into the box body; generally speaking, the bottom plate of the battery pack is made of standard profiles, the cavity inside the profile is used as a flow channel for the cooling liquid to circulate; and in order to further reduce the flow resistance of the cooling liquid in the channel, a cooling channel structure design with multiple parallel channels is usually adopted. However, due to the large flow rate of the cooling liquid, the cooling liquid in the multiple parallel flow channels has uneven distribution problems, causing the battery module in the battery pack to be unevenly cooled by the liquid cooling flow channels, and finally, the temperature difference between the battery modules in the battery pack is large during the charging and discharging process, and the life consistency of the battery module is poor, reducing the life of the battery pack as a whole

In related technology, practitioners set up fire isolation panels between multiple battery packs to prevent the spread of fire. However, when multiple battery packs and battery clusters catch fire due to thermal runaway, a large amount of gas is usually generated, which can cause more serious consequences if the pressure is not depressurized in time. In response to such problems, some practitioners set up exhaust channels inside the battery compartment, but because the battery pack is isolated by a fire isolation panels, its exhaust efficiency is affected by the fire isolation panels. When multiple batteries deflagrate, it may still cause the cabinet to deform or even burst, which has a large safety hazard. In addition, due to the large number of battery packs in the existing battery compartment and the complex layout, the thermal management of the battery packs in the battery clusters in the prior art often has the problem of uneven cooling liquid delivery and inefficient cooling.

Therefore, a battery box, battery pack and energy storage container are urgently needed to solve the above problems.

### Summary

The technical problem to be solved by the present invention is to provide a battery box, battery pack and energy storage container, which can achieve uniform heat dissipation of the battery module, convenient for thermal management inside the battery pack and improving the safety of the battery.

In order to solve the above technical problems, the present application provides a battery box, comprising: a bottom plate and a frame, the bottom plate and the frame together form an installation cavity, the bottom plate is provided with a number of cooling flow channels, and the cooling flow channels are used for circulating cooling medium; a coolant-converging-channel, at least one end of the bottom plate is provided with the coolant-converging-channel, the coolant-converging-channel is located inside or outside the installation cavity, and the coolant-converging-channel connects to the bottom plate and is interconnected to the cooling flow channels.

Optionally, when the coolant-converging-channel is located outside the installation cavity, the frame includes a plurality of side plates and at least one mounting plate, a mounting slot is formed between the mounting plate and the bottom plate, and at least part of the coolant-converging-channel is accommodated inside of the mounting slot.

Optionally, the mounting plate includes a flat plate section and a bent plate section connected in sequence, one end of the bent plate section is connected to the flat plate section, another end of the bent plate section extends toward a direction of the installation cavity and is connected to the bottom plate, and the mounting slot is formed between the bent plate section and the bottom plate.

Optionally, the plurality of side plates include a first side plate connected to both ends of the mounting plate, the coolant-converging-channel extends along a second direction, and a projection of the coolant-converging-channel on the first side plate along the second direction does not exceed the first side plate.

Optionally, the coolant-converging-channel is accommodated inside of the mounting slot; or along a first direction, part of the coolant-converging-channel is accommodated inside the mounting slot, another part of the coolant-converging-channel is exposed outside the mounting slot, a portion of the side plate extending along the first direction to outside of the mounting plate forms a redundant portion, and the projection area of the coolant-converging-channel along the second direction is within the redundant portion.

Optionally, when the coolant-converging-channel is located outside the installation cavity, one end of the frame facing away from the bottom plate has a flange extending toward the outside of the installation cavity, and along the direction perpendicular to the bottom plate, a projection area of the flange on the bottom plate includes the projection area of the coolant-converging-channel on the bottom plate.

Optionally, the side plates include a first side plate connected to both ends of the mounting plate, and a reinforcing plate is provided at one end of the first side plate close to the bottom plate, the reinforcing plate is arranged on a side of the first side plate away from the installation cavity, a side of the reinforcing plate facing away from the installation cavity protrudes, and a sandwich cavity is formed between the reinforcing plate and the first side plate.

Optionally, the side plates include a first side plate connected to both ends of the mounting plate, a reinforcing beam is provided on a side of the first side plate away from the installation cavity, and the reinforcing beam extends along the first direction.

Optionally, when the coolant-converging-channel is located outside the installation cavity, the coolant-converging-channel is provided at one end of the bottom plate, and the bottom plate also has a liquid inlet and a liquid outlet interconnected to the cooling flow channel, the coolant-converging-channel has a liquid inlet flow channel and a liquid outlet flow channel, the liquid inlet flow channel is interconnected with the liquid inlet, and the liquid outlet flow channel is interconnected with the liquid outlet; or the coolant-converging-channel is provided at both ends of the bottom plate, the coolant-converging-channel located on one end includes a liquid inlet flow channel interconnected to a liquid inlet of the cooling flow channel, and the coolant-converging-channel located at another end includes a liquid outlet flow channel interconnected to a liquid outlet of the cooling flow channel.

Optionally, the battery box comprises a box body, the box body includes the bottom plate and the frame, the bottom plate and the frame together form the installation cavity, the bottom plate is provided with a number of parallel cooling flow channels, the cooling flow channels are used for circulating cooling medium, and the frame is provided with a liquid inlet structure and a liquid outlet structure; the coolant-converging-channel, the coolant-converging-channel is installed on the bottom plate, a coolant-converging-channel cavity is formed inside the coolant-converging-channel, the coolant-converging-channel cavity is divided into a liquid inlet flow channel and a liquid outlet flow channel, one end of the liquid inlet flow channel is interconnected with the liquid inlet structure, another end of the liquid inlet flow channel is interconnected with liquid inlets of several parallel cooling flow channels, one end of the liquid outlet flow channel is interconnected with the liquid outlets of several parallel cooling flow channels, and another end of the liquid outlet flow channel is interconnected with the liquid outlet structure; a flow guide structure, and the flow guide structure includes a male end and a female end, the male end is arranged on the coolant-converging-channel, the female end is arranged on the bottom plate, the male end is matching connected to the female end, and the flow guide structure allows the cooling medium to enter evenly into several parallel cooling flow channels.

Optionally, the coolant-converging-channel is located inside the installation cavity, and the liquid inlet structure includes a water inlet and a first flow collecting block, the water inlet passes through on the frame, and the first flow collecting block is interconnected with the water inlet and the liquid inlet flow channel; the liquid outlet structure includes a water outlet and a second flow collecting block, the water outlet passes through on the frame, and the second flow collecting block is interconnected with the water outlet and the liquid outlet flow channel; a bottom wall of the coolant-converging-channel is provided with a number of liquid inlet flow ports and a number of liquid outlet flow ports, several of inlet flow ports are interconnected with the liquid inlet flow channel, several of the liquid outlet flow port are interconnected with the liquid outlet flow channel, the liquid inlet flow ports and the liquid outlet flow ports correspond to the cooling flow channel one-to-one, each of the liquid inlet flow ports is interconnected with the liquid inlet of one cooling flow channel, and each of the liquid outlet flow ports is interconnected with a corresponding liquid outlet of the cooling flow channel.

Optionally, an upper limit step is provided in a circumferential direction of the liquid inlet flow port and/or the liquid outlet flow port, and the upper limit step constitutes the male end of the flow guide structure; a lower limit step is recessed on the bottom plate at a position corresponding to the upper limiting step, the lower limit step constitutes the female end of the flow guide structure, the upper limit step and the lower limit step intersect with each other and form a mating connection surface, and the upper limiting step introduces the cooling medium into the cooling flow channel.

Optionally, the bottom plate is provided with partition bars, and the partition bars divide the cooling flow channel into a plurality of sub-flow channels.

Another aspect of the present invention also provides a battery pack, the battery pack comprises a plurality of batteries and a battery box mentioned above, and the battery box is suitable to accommodate the plurality of batteries.

Optionally, the battery pack also includes an aerosol fire extinguishing device and a battery management system, wherein, the aerosol fire extinguishing device is located above the plurality of batteries or on one side of the plurality of batteries; the aerosol fire extinguishing device further includes a status feedback device, and the aerosol fire extinguishing device is configured to be connected to the battery management system through the status feedback device, the status feedback device is suitable to provide the battery management system with a status quantity of whether the aerosol fire extinguishing device is activated.

Another aspect of the present invention also provides an energy storage container, further comprising: a battery rack, and the battery rack is divided into a plurality of independent units for accommodating the battery pack mentioned above.

Optionally, the energy storage container further comprises a chiller, a primary pipeline, a secondary pipeline and a tertiary pipeline, wherein, the primary pipeline is connected to a chiller water inlet and a chiller water outlet of the chiller; the secondary pipeline is connected to the primary pipeline, and the tertiary pipeline is connected between a plurality of battery packs and the secondary pipeline; the primary pipeline is configured to deliver cooling liquid from the chiller to the secondary pipeline, or to receive cooling liquid from the secondary pipeline and deliver to the chiller, and the secondary pipeline is configured to receive cooling liquid of the primary pipeline and deliver to the tertiary pipeline, or to receive cooling liquid of the tertiary pipeline and deliver to the primary pipeline; and the tertiary pipeline is interconnected to the cooling flow channel of the battery box in the battery pack, and the tertiary pipeline is configured to receive cooling liquid of the secondary pipeline and deliver to the cooling flow channel, or to receive cooling liquid output from the cooling flow channel and then deliver to the secondary pipeline.

Optionally, the energy storage container further comprises a fire-resisting wall assembly, which is arranged in the battery rack and is cross arranged longitudinally and transversely along the battery rack, and the fire-resisting wall assembly is also provided with a fire-resisting and pressure relief unit which can form a cold wall effect and a container wall effect.

Optionally, the fire-resisting and pressure relief unit comprises a plurality of micropores, the micropores are provided on the fire-resisting wall assembly, the micropores are through holes, a projected area of the micropores in any plane perpendicular to the through holes direction of the micropores is less than or equal to 1mm².

Optionally, the fire-resisting wall assembly comprises: a fire-resisting wall between battery clusters, which is used to be erected between two adjacent battery clusters, and each of the battery clusters includes a plurality of the battery packs; a fire-resisting wall between battery packs, which is used to be erected between two adjacent battery packs; wherein the projected area of the micropores on the fire-resisting wall between battery clusters in any plane perpendicular to the through holes direction of the micropores is smaller than that of the projection of the micropores on the fire-resisting wall between battery packs in any plane perpendicular to the through holes direction of the micropore.

Optionally, the battery rack comprises a frame, a cluster frame and a plurality of clamping slots, the cluster frame is located in the frame, the cluster frame is used for installing the battery pack, the plurality of the clamping slots are respectively provided on the cluster frame, and the fire-resisting wall assembly is clamped on the cluster frame through the clamping slots.

Compared with the prior art, the present application has the following advantages. The technical scheme of the application realizes even diversion among a plurality of parallel cooling flow channels, and then the cooling medium in the plurality of cooling flow channels can evenly dissipate heat to each part of the battery module respectively, so that the temperature difference inside the same battery module and between a plurality of battery modules is small, and its life consistency is high, so the lifetime of the battery pack is improved as a whole. On this basis, a plurality of battery modules are arranged in the installation cavity of the box, and a plurality of parallel cooling flow channels are arranged in the bottom plate of the box body, and the cooling flow channels are used for the circulation of cooling medium, and the cooling medium can cool down a plurality of battery modules. The coolant-converging-channel and the flow guide structure evenly divert the cooling medium to the parallel cooling flow channel, so that the battery modules in the battery pack are evenly cooled, and finally the temperature difference of multiple battery modules in the battery pack is small, the life consistency is high, and the lifetime of the battery pack is improved as a whole. In addition, the structure of the battery box is simple, easy to process, and the difficulty of production and manufacturing is low, which is conducive to improving production efficiency and low cost.

The variant embodiment of the present application realizes the protection of the battery by arranging the coolant-converging-channel outside the installation cavity, and when the cooling liquid in the coolant-converging-channel is leaking, the leaking cooling liquid is located outside the installation cavity, and the leaking cooling liquid does not affect the battery located inside the installation cavity. On this basis, the mounting slot formed by the combination of the frame and the bottom plate can protect the coolant-converging-channel, so as to reduce the damage caused to the coolant-converging-channel during installation or handling, reducing the risk of leakage caused by collision.

On the other hand, the application is used as a flame suppression unit through the micropores on the fire-resisting wall assembly, and the micropores on the fire-resisting wall assembly make the flame unable to pass through the fire-resisting wall assembly through the cold wall effect and the container wall effect, that is, the spread of the flame is contained; and at the same time, a plurality of micropores on the fire-resisting wall assembly can also be used as pressure relief holes, and a large amount of gas generated by the fire can be discharged through the micropores, so as to prevent the air pressure in the battery compartment from being too high and causing more serious safety consequences.

Some other variant embodiments of the present application can further improve the safety performance of the battery by arranging an aerosol fire extinguishing device in the battery pack. In addition, a tertiary pipeline is set up in the container, so that the cooling liquid of the chiller can reach the cooling flow channel in the battery pack according to a more even flow rate and flow, improving the cooling effect of the battery module.

### Brief Description of the Drawings

The drawings are included to provide a further understanding of the present application, and they are included and constitute a part of the present application, the drawings show the embodiments of the present application, and serving to explain the principles of the present application together with the description. In the drawings:
Fig. 1 is a schematic view of the three-dimensional structure of the battery box provided in the present application;
Fig. 2 is an exploding view of the battery box provided in the present application;
Fig. 3 is a schematic view of the structure of the bottom plate provided in the present application;
Fig. 4 is a schematic view of the internal structure of the coolant-converging-channel provided in the present application;
Fig. 5 is a schematic view of the structure of the battery box provided in the embodiment of the present application;
Fig. 6 is an exploded view of the battery box provided in the embodiment of the present application;
Fig. 7 is a schematic view of the structure of the battery box (after removing the side frame and the rear frame) provided in the embodiment of the present application from the first point of view;
Fig. 8 is a partial enlarged view of position A in Fig. 7;
Fig. 9 is a schematic view of the structure of the lower battery box (after removing the side frame and the rear frame) provided in the embodiment of the present application from the second point of view;
Fig. 10 is a partial enlarged view of position B in Fig. 9;
FIG. 11 is a schematic view of the liquid outlet structure provided in the embodiment of the present application;
Fig. 12 is a schematic view of the structure of the battery box (after removing the side frame and the rear frame) provided in the embodiment of the present application from the third point of view;
Fig. 13 is a cross-sectional view of the C-C section in Fig. 12;
Fig. 14 is a partial enlarged view of position D in Fig. 13;
Fig. 15 is a partial enlarged view of position E in Fig. 13;
Fig. 16 is a schematic view of a containerized energy storage battery compartment in the embodiment of the present application;
Fig. 17 is a schematic view of the structure of the fire-resisting board in the embodiment of the present application;
Fig. 18 is a front view of the fire-resisting wall between battery clusters in the embodiment of the present application;
Fig. 19 is a top view of the fire-resisting wall between battery clusters in the embodiment of the present application;
Fig. 20 is a schematic view of the structure of the cluster frame in the embodiment of the present application;
Fig. 21 is a top view of the battery rack in the embodiment of the present application;
Fig. 22 is a front view of the battery rack in the embodiment of the present application;
Fig. 23 is a top view of the part of the structure of the battery rack in the embodiment of the present application;
Fig. 24 is a schematic view of a battery pack in the embodiment of the present application and an aerosol fire extinguishing device located at its upper part;
Fig. 25~Fig. 27 is a schematic view of the arrangement of a chiller, a primary pipeline, a secondary pipeline and a tertiary pipeline in an energy storage container in the embodiment of the application.

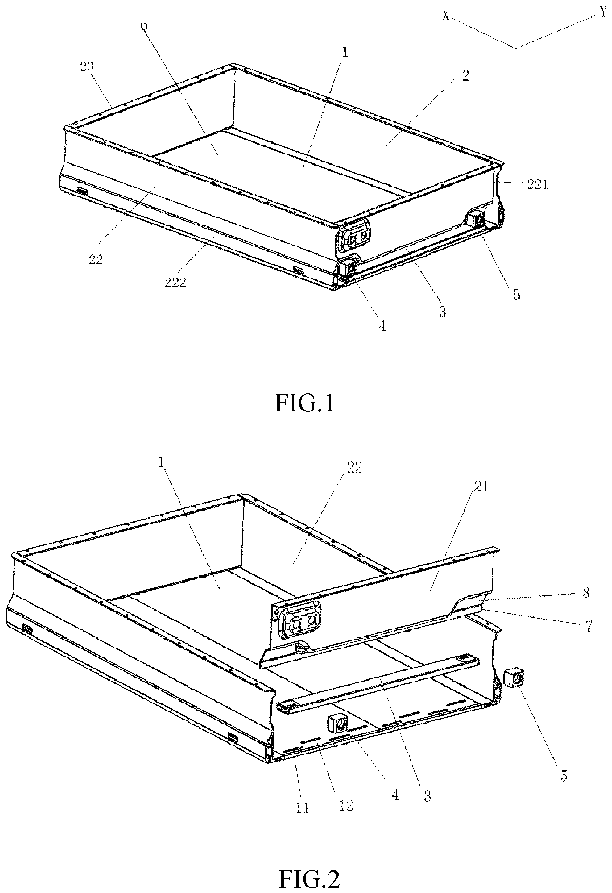

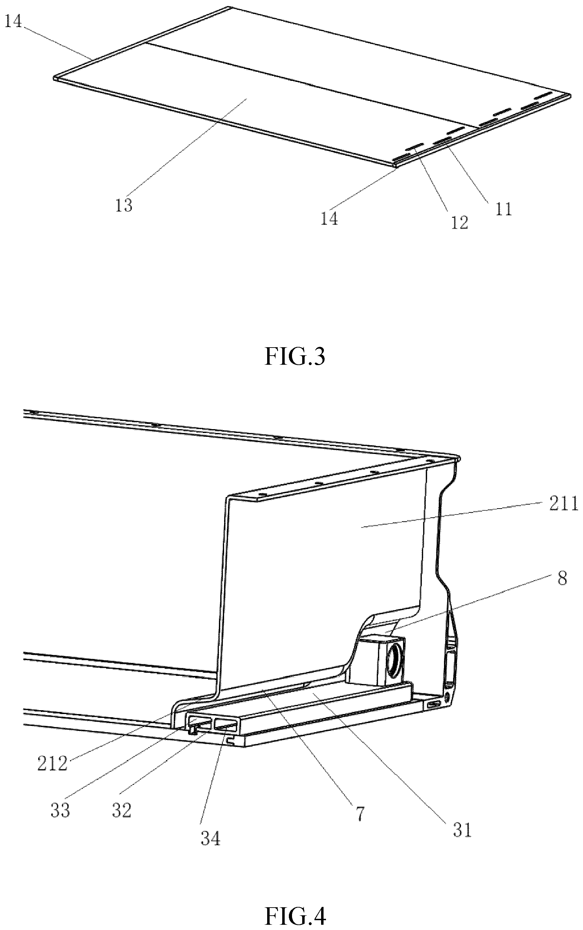

In Fig. 1~Fig. 4: 1. bottom plate; 11. liquid inlet; 12. liquid outlet; 13. body; 14. plug; 2. frame; 21. mounting plate; 211. flat plate section; 212. bent plate section; 22. first side plate; 221. redundant portion; 222. reinforcing plate; 23. flange; 3. coolant-converging-channel; 31. shell; 32. clapboard; 33. liquid outlet channel; 34. liquid inlet channel; 4. liquid inlet structure; 5. liquid outlet structure; 6. installation cavity; 7. mounting slot; 8. avoidance area.

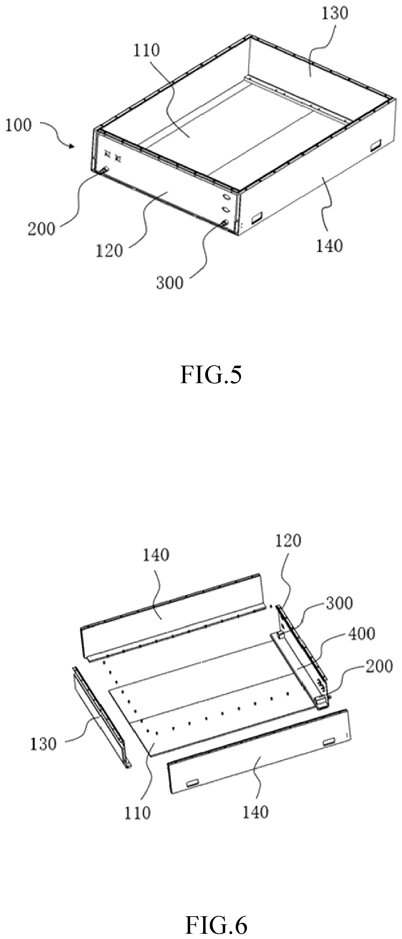

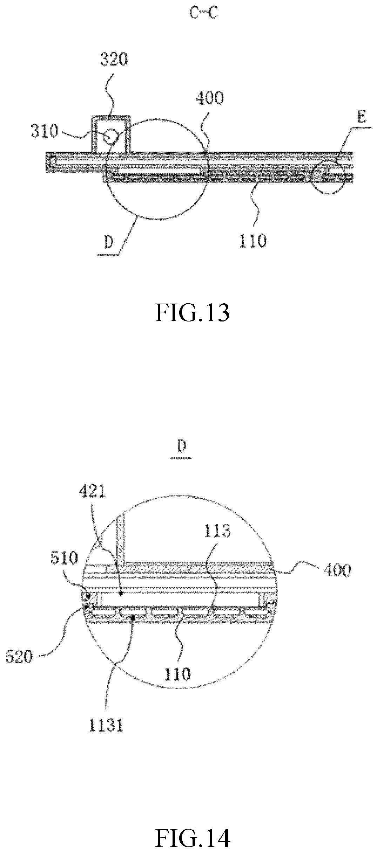

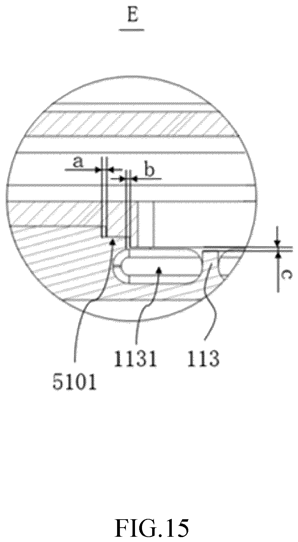

In Fig. 5~Fig. 15: 100. box body; 110. bottom plate; 111. liquid inlet; 112. liquid outlet; 113. partition bar; 1131. sub-flow channel; 120. front frame; 121. first through hole; 130. rear frame; 140. side frame; 200. liquid inlet structure; 210. water inlet; 220. first flow collecting block; 300. liquid outlet structure; 310. water outlet; 320. second flow collecting block; 321. second flow collecting cavity; 400. coolant-converging-channel; 401. second through hole; 410. liquid inlet flow channel; 411. liquid inlet flow port; 420. liquid outlet flow channel; 421. liquid outlet flow port; 510. upper limit step; 520. lower limit step; 5101. mating connection surface.

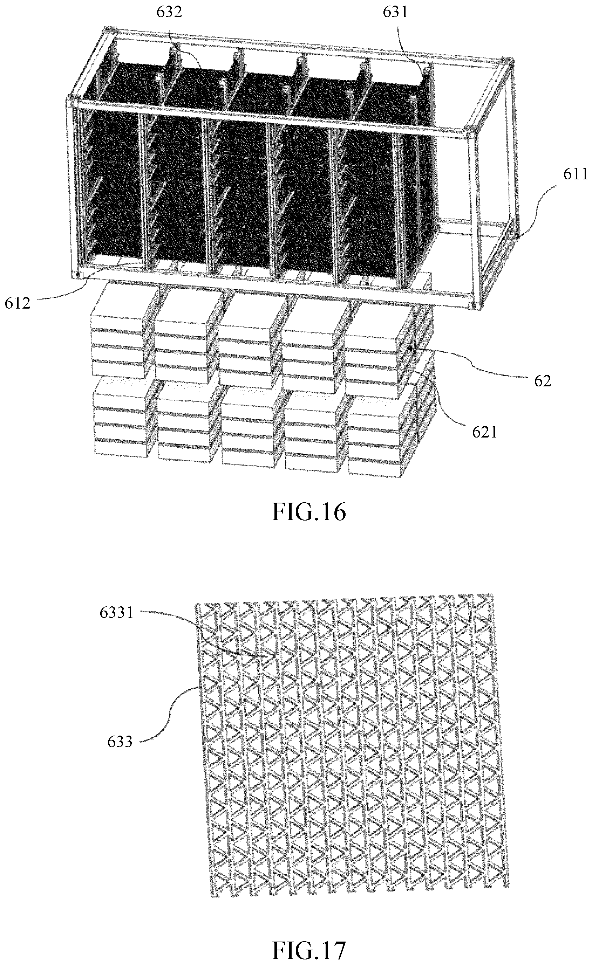

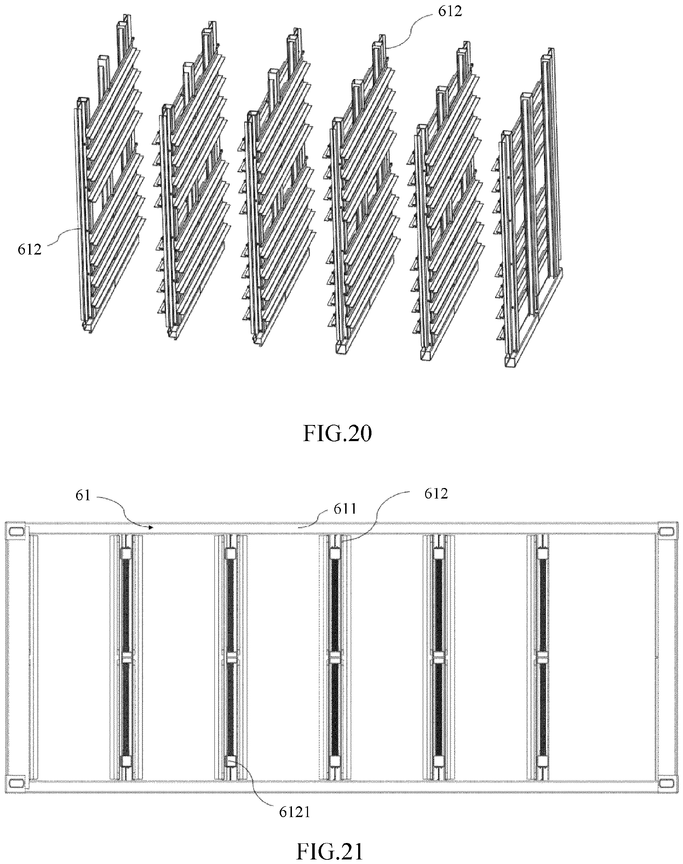

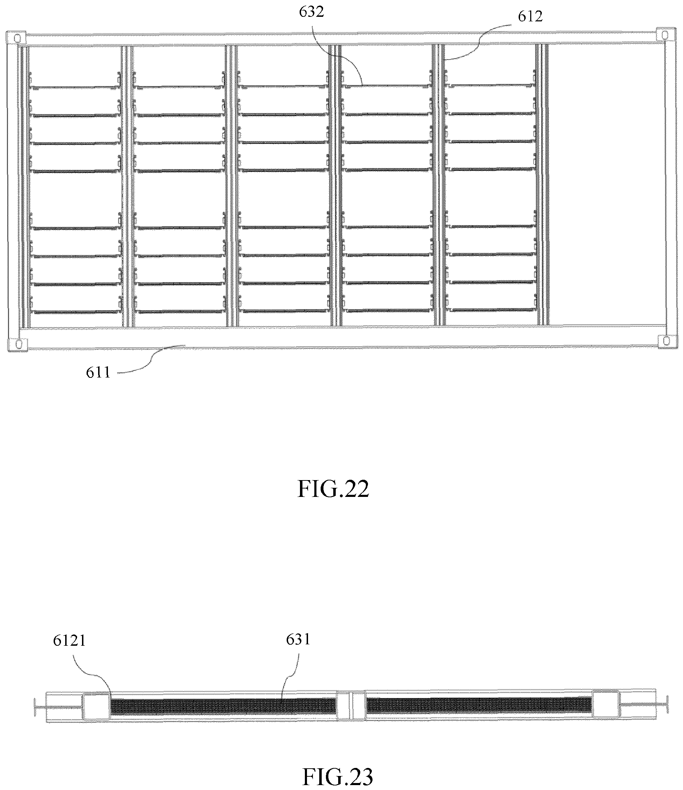

In Fig. 16~Fig. 23: 61. battery rack; 611. frame; 612. cluster frame; 6121. clamping slot; 62. battery cluster; 621. battery pack; 63. fire-resisting wall assembly; 631. fire-resisting wall between battery clusters; 632. fire-resisting wall between battery packs; 633. fire-resisting board; 6331. through hole; 64. micropore.

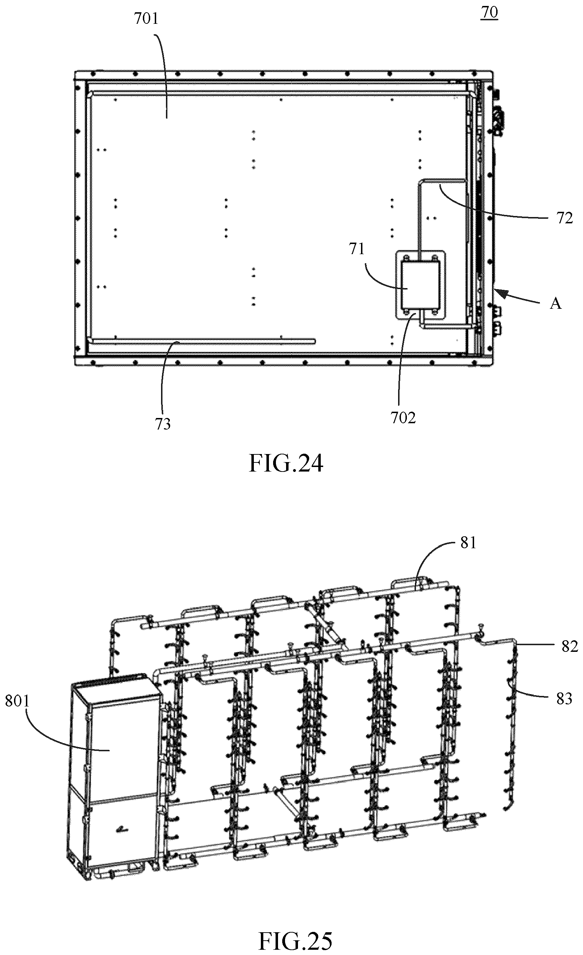

In Fig. 24~Fig. 27: 70. battery pack; 71. aerosol fire extinguishing device; 72. connecting wire; 73. heat-sensitive wire; 701. insulating layer; 702. buffer layer; 801. chiller; 81. primary pipeline; 82. secondary pipeline; 83. tertiary pipeline; 84. connection part (adopting corrugated pipe section design).

### Preferred Embodiment of the Present Invention

In order to illustrate the technical solutions in the embodiments of the present application more clearly, the drawings that need to be used in the description of the embodiments will be briefly introduced below. Obviously, the drawings in the following description are only some embodiments of the present application, and for those skilled in the art, other drawings can also be obtained based on these drawings without creative effort.

As indicated in this application and claims, the terms "a", "an", "a kind of' and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

The relative arrangements of components and steps, numerical expressions and numerical values set forth in these embodiments do not limit the scope of the present application unless specifically stated otherwise. At the same time, it should be understood that, for the convenience of description, the sizes of the various parts shown in the drawings are not drawn according to the actual proportional relationship. Techniques, methods and devices known to those of ordinary skill in the relevant art may not be discussed in detail, but where appropriate, such techniques, methods and devices should be considered part of the authorized specification. In all embodiments shown and discussed herein, any specific values should be construed as illustrative only, and not as limiting. Therefore, other examples of the exemplary embodiment may have different values. It should be noted that like numerals and letters denote like items in the following figures, therefore, once an item is defined in one figure, it does not require further discussion in subsequent drawings.

In the description of the present application, it should be understood that orientation words such as "front, back, up, down, left, right", "landscape, portrait, vertical, horizontal" and "top, bottom" etc. indicating the orientation or positional relationship is generally based on the orientation or positional relationship shown in the drawings, only for the convenience of describing the application and simplifying the description, in the absence of a contrary statement, these orientation words do not indicate or imply that the device or element referred to must have a specific orientation or be constructed and operated in a specific orientation, and therefore cannot be construed as limiting the scope of protection of this application; the orientation words "inside and outside" refer to inside and outside relative to the outline of each part itself.

For the convenience of description, spatially relative terms may be used here, such as "on ...", "over ...", "on the upper surface of...", "above", etc., to describe the spatial positional relationship between one device or feature and other devices or features. It will be understood that, in addition to the orientation depicted in the drawings, the spatially relative terms are intended to encompass different orientations of the device in use or operation. For example, if the device in the drawings is turned over, devices described as "on other devices or configurations" or "above other devices or configurations" would then be oriented "beneath other devices or configurations" or "under other devices or configurations". Thus, the exemplary term "above" can encompass both an orientation of "above" and "beneath". The device may be otherwise oriented (rotated 90 degrees or at other orientations), and making a corresponding explanation for the space relative description used here.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

The present application proposes a battery box with reference to Fig. 1~Fig. 15, comprising a bottom plate and a frame, the bottom plate and the frame together form an installation cavity, the bottom plate is provided with a number of cooling flow channels, and the cooling flow channels are used for circulating cooling medium; a coolant-converging-channel, at least one end of the bottom plate is provided with the coolant-converging-channel, the coolant-converging-channel is located inside or outside the installation cavity, and the coolant-converging-channel connects to the bottom plate and are interconnected to the cooling flow channel. Wherein, Fig. 1~Fig. 4 shows the embodiment that the coolant-converging-channel is located at the outside the installation cavity, and Fig. 5~Fig. 15 shows the embodiment that the coolant-converging-channel is located inside the installation cavity; and the embodiment that the coolant-converging-channel is located on the inside or the outside of the installation cavity can all realize the even heat dissipation to the battery module, facilitating the thermal management inside the battery pack, improving the safety of the battery, and on this basis, the embodiments of these two cases can also make the thermal management inside the battery pack have specific technical effects, which are explained separately below.

First, with reference to Fig. 1~Fig. 4, in order to solve the problem that in the prior art, the cooling liquid leaking in the battery box will come into contact with the battery in the battery box, easily causing short circuit of the battery, this application provides a battery box, in which the position that may occur leaking is arranged outside the accommodating cavity where the battery is placed in the box body, so as to overcome the problem in the prior art.

As shown in Fig. 1 to Fig. 4, the battery box comprises a bottom plate 1, a frame 2 and a coolant-converging-channel 3, the bottom plate 1 and the frame 2 together form an installation cavity 6, the bottom plate 1 is provided with a number of cooling flow channels, and the cooling flow channels are used for circulating cooling medium; at least one end of the bottom plate 1 is provided with the coolant-converging-channel 3, the coolant-converging-channel 3 is located outside the installation cavity 6, and the coolant-converging-channel 3 connects to the bottom plate 1 and is interconnected to the cooling flow channel.

Wherein, the first direction is the X direction in Fig. 1 and the second direction is the Y direction in Fig. 1.

Specifically, the cooling flow channel arranged in the bottom plate 1 is used for the flow of cooling liquid, cooling the battery located in the installation cavity 6, and forming the circulation of cooling liquid for the cooling liquid in the cooling flow channel through the coolant-converging-channel 3. The application arranges the coolant-converging-channel 3 on the bottom plate 1, and the setting position of the coolant-converging-channel 3 is outside the installation cavity 6, so that when the cooling liquid leaks, because the leaking part is outside the installation cavity 6, the leaking cooling liquid cannot cause damage to the battery, and the protective effect of the battery in the battery box is achieved.

It should be noted that at least one end of the bottom plate 1 in the present application is provided with the coolant-converging-channel 3, which means that the coolant-converging-channel can be arranged at one end of the bottom plate 1 or at two ends of the bottom plate 1, wherein the coolant-converging-channel 3 is arranged at one end of the bottom plate 1, specifically comprising: the coolant-converging-channel 3 may be arranged at the top surface of the end area of the bottom plate 1 along the first direction, or it can be arranged at the side surface of the end area of the bottom plate 1, and it can also be arranged at the top surface and the side surface of the end area of the bottom plate 1. The specific setting position of the coolant-converging-channel 3 can be adaptively adjusted according to the needs.

In the present embodiment, two different embodiments are provided according to the different ways in which the coolant-converging-channel 3 is arranged.

In a specific embodiment not shown, a coolant-converging-channel 3 is arranged at both ends of the bottom plate 1 along the first direction, one coolant-converging-channel 3 is interconnected with the liquid inlet end of the cooling flow channels, and the other coolant-converging-channel 3 is interconnected with the liquid outlet end of the cooling flow channels.

Wherein, the cooling flow channels provided by the bottom plate 1 is used for the cooling liquid to flow in one direction, that is, the cooling liquid flows along the first direction, flowing into the cooling flow channels through one coolant-converging-channel 3 and flowing out of the cooling flow channels through another coolant-converging-channel 3; the flow efficiency of cooling liquid is improved by arranging two coolant-converging-channels 3, and then the heat dissipation efficiency is improved. The embodiment of the application does not limit the specific arrangement mode of the cooling flow channel in the bottom plate 1, and in a possible embodiment, a plurality of parallel cooling flow channels are arranged in the bottom plate 1, and the coolant-converging-channel 3 is interconnected with a plurality of parallel cooling flow channels at the same time; at this time, the flow distance of the cooling liquid is shorter, and the cooling effect is better.

In the specific embodiment shown in Fig. 1 and Fig. 2, a coolant-converging-channel 3 is arranged at one end of the bottom plate 1 along the first direction, and the coolant-converging-channel 3 is interconnected with the liquid inlet end and the liquid outlet end of the cooling flow channel respectively.

Wherein, only one coolant-converging-channel 3 is arranged on the bottom plate 1, and the coolant-converging-channel 3 is interconnected with the inlet end and the outlet end of the cooling flow channels simultaneously, so that one coolant-converging-channel 3 has the technical effect of both liquid inlet and liquid return, and it achieves cooling liquid flow, reducing use of components and improving assembly efficiency by setting one coolant-converging-channel 3.

As shown in Fig. 1 and Fig. 2, the frame 2 comprises a plurality of side plates and at least one mounting plate 21, a mounting slot 7 is formed between the mounting plate 21 and the bottom plate 1, and at least part of the coolant-converging-channel 3 is accommodated inside of the mounting slot 7.

Specifically, a plurality of side plates and mounting plates 21 are enclosed to form frame 2.

Wherein, the side plates are at least two, the mounting plate 21 is provided with at least one, and the application is not limited to the cubic structure of the frame 2 formed by the side plates and the mounting plate shown in the figure. It can also be that the sum of the number of side plates and mounting plate 21 is five, and the side plates and mounting plate 21 form corresponding pentagonal cavities. Of course, the sum of the number of side plates and mounting plate 21 can also be six or seven or other quantities, and the corresponding side plates and mounting plate 21 cooperate to enclose the corresponding cavities.

It should be noted that the structural arrangement of the mounting slot 7 can be a structure that the opening is facing away from one side of the bottom plate 1, or a structure that the opening is facing towards one side of the bottom plate 1, or a structure that the opening is facing toward one side of the installation cavity 6, and can also be a structure that the opening is facing away from one side of the installation cavity 6.

In one embodiment of the present embodiment, a plurality of side plates comprise a second side plate and a mounting plate 21 arranged at intervals along the first direction, two first side plates 22 arranged at intervals along the second direction perpendicular to the first direction, and a coolant-converging-channel 3 is arranged on one side of the mounting plate 21 facing away from the installation cavity 6.

Wherein, when two ends of the bottom plate 1 are provided with coolant-converging-channel 3, the second side plate is the mounting plate 21.

Further, the coolant-converging-channel 3 is positioned outside of the installation cavity 6 to prevent the cooling liquid from entering into the installation cavity 6 when the cooling liquid leaks, so that the battery in the installation cavity 6 is protected.

Further, along the height direction of the mounting plate 21, the mounting plate 21 comprises a sequentially formed flat plate section 211 and bent plate section 212, one end of the bent plate section 212 is connected with the flat plate section 211, another end of the bent plate section 212 is bent towards the direction of the installation cavity 6, and a mounting slot 7 is formed between the bent plate section 212 and the bottom plate 1.

Wherein, the connecting area of the mounting plate 21 and the bottom plate 1 forms a mounting slot 7 with an opening facing away from the installation cavity 6, and at least a part of the coolant-converging-channel 3 is accommodated inside of the mounting slot 7. The coolant-converging-channel 3 placed in the mounting slot 7 can be protected by the mounting plate 21, so that the external force can act on the mounting plate 21 and will not directly act on the coolant-converging-channel 3 when there is a collision, which is conducive to reducing the damage caused to the coolant-converging-channel 3 in the process of installation or handling, playing a protective role to the coolant-converging-channel 3.

When only one coolant-converging-channel 3 is provided on the bottom plate 1, only the connection area between the mounting plate 21 and the bottom plate 1 is formed with a mounting slot 7 with an opening facing away from the installation cavity 6; when two coolant-converging-channels 3 are provided on the bottom plate 1, the corresponding connection area of the two mounting plates 21 and the bottom plate 1 are both formed with a mounting slot 7 with an opening facing away from the installation cavity 6.

At least a part of the coolant-converging-channel 3 is accommodated inside the mounting slot 7, that is, the coolant-converging-channel 3 can be completely accommodated inside the mounting slot 7, or a part of the coolant-converging-channel 3 is accommodated inside the mounting slot 7.

Specifically, the coolant-converging-channel (3) extends along a second direction, and a projection of the coolant-converging-channel (3) on the first side plate (22) along the second direction does not exceed the first side plate (22), so that the coolant-converging-channel 3 is protected through the first side plate 22.

In this embodiment, when part of the coolant-converging-channel 3 is accommodated inside the mounting slot 7 along the first direction, another part of the coolant-converging-channel 3 is exposed outside the mounting slot 7, the portion of the side plate 22 extending along the first direction to outside of the mounting plate 21 forms a redundant portion 221, and the projection area of the coolant-converging-channel 3 along the second direction is within the redundant portion 221. The redundant portion 221 along the second direction is used for limiting and protection of the coolant-converging-channel 3. The redundant portion 221 arranged on the two first side plates 22 set at intervals along the second direction can realize the effect of the upper limit position and the protection of the coolant-converging-channel 3 in the second direction, improving the stability and safety of the installation of the coolant-converging-channel 3.

It should be noted that when the coolant-converging-channel 3 is completely accommodated inside of the mounting slot 7, the redundant portion 221 may not be arranged in this case.

As shown in Fig. 1 and Fig. 2, one end of frame 2 facing away from the bottom plate 1 has a flange 23 extending toward the outside of the installation cavity 6, and the projection area of the flange 23 on the bottom plate 1 includes the projection area of the coolant-converging-channel 3 on the bottom plate 1 along the direction perpendicular to the bottom plate 1.

Specifically, the setting of the flange 23 is conducive to realizing a sealed connection, and the projection area of the flange 23 on the bottom plate 1 includes the projection of the coolant-converging-channel 3 on the bottom plate 1; the flange 23 at the same time has the effect of protecting the coolant-converging-channel 3, further improving the stability of the use of the coolant-converging-channel 3.

In this embodiment, as shown in Fig. 1 and Fig. 2, a plurality of side plates along the second direction includes first side plate 22 connected to both ends of the mounting plate 21, and reinforcing plate 222 is provided at one end of the first side plate 22 close to the bottom plate 1; the reinforcing plate 222 is arranged on a side of the first side plate 22 facing away from the installation cavity, a side of the reinforcing plate 222 facing away from the installation cavity 6 protrudes, and a sandwich cavity is formed between the reinforcing plate 222 and the first side plate 22.

Specifically, the reinforcing plate 222 and the first side plate 22 cooperate to form a sandwich structure with a sandwich cavity; the arrangement of the sandwich structure is conducive to improving the connection strength between the first side plate 22 and the bottom plate 1, and the arrangement of the reinforcing plate 222 is also conducive to facilitating the hoisting of the battery box as a whole. Wherein the reinforcing plate is provided with a hoisting hole or a lifting lug structure for hoisting.

Further, a reinforcing beam is arranged on one side of the first side plate 22 facing away from the installation cavity, and the reinforcing beam extends along the first direction. Arranging the reinforcing beam is conducive to strengthening the strength of the first side plate 22, and improving the strength of the frame as a whole, which is conducive to improving the stability of the battery box as a whole, realizing better protection of the battery inside the battery box.

Further, the reinforcing beams are arranged with one or more, and when the reinforcing beams are arranged with a plurality, the plurality of reinforcing beams are arranged at intervals along the height direction of the first side plate 22.

In this embodiment, when the coolant-converging-channel 3 is arranged at one end of the bottom plate 1, the bottom plate 1 is further provided with a liquid inlet 11 and a liquid outlet 12 that are interconnected with the cooling flow channel; the coolant-converging-channel 3 has a liquid inlet flow channel 34 and a liquid outlet flow channel 33 arranged at intervals along the first direction, the liquid inlet flow channel 34 is interconnected with the liquid inlet port 11, and the liquid outlet flow channel 33 is interconnected with the liquid outlet 12.

Wherein, the liquid inlet 11 arranged on the bottom plate 1 is interconnected with the liquid inlet flow channel 34 in the coolant-converging-channel 3, the liquid outlet 12 arranged on the bottom plate 1 is interconnected with the liquid outlet flow channel 33 in the coolant-converging-channel 3, the liquid inlet flow channel 34 is interconnected with the liquid outlet flow channel 33 through the cooling flow channel, and the cooling liquid flow is achieved through the liquid inlet from the liquid inlet flow channel 34 and the liquid outlet of the liquid outlet flow channel 33. That is, the cooling liquid flows into the cooling flow channel through the liquid inlet flow channel 34, and the cooling liquid inside the cooling flow channel flows out through the liquid outlet flow channel 33, so that the flow of cooling liquid is achieved.

Further, the coolant-converging-channel 3 comprises a shell 31 and a clapboard 32, the clapboard 32 is arranged inside the shell 31, the clapboard 32 is arranged along a second direction perpendicular to the first direction, and the clapboard 32 separates the inner part of the shell 31 into a liquid inlet flow channel 34 and a liquid outlet flow channel 33.

The coolant-converging-channel 3 is separated into a liquid inlet flow channel 34 and a liquid outlet flow channel 33 through the clapboard 32, and the inside of the coolant-converging-channel 3 is divided into two parts; when the cooling liquid flows, the cooling liquid inside the liquid inlet flow channel 34 and the liquid outlet flow channel 33 are not interconnected, so that the confusion of cooling liquid is avoided and the cooling liquid is guaranteed to flow through the liquid inlet flow channel 34, the cooling flow channel and the liquid outlet flow channel 33 in turn, so that the liquid cooling circulation of cooling liquid is realized.

In this embodiment, the battery box further comprises a flow guide structure, the flow guide structure includes a male end and a female end, the male end is arranged on the coolant-converging-channel 3, the female end is arranged on the bottom plate 1; the male end is matching connected to the female end, and the flow guide structure allows the cooling medium to enter evenly into several parallel cooling flow channels. By setting the flow guide structure, it is beneficial to improve the smoothness and uniformity of the flow of the cooling medium, which in turn is conducive to improving the efficiency of liquid cooling.

The liquid inlet flow channel 34 of the coolant-converging-channel 3 is provided with a liquid inlet flow port, the liquid inlet flow port corresponds one-to-one to the liquid inlet 11 arranged on the bottom plate 1; the cooling flow channel in the bottom plate 1 is interconnected with the liquid inlet flow channel 34 in the coolant-converging-channel 3 through the liquid inlet flow port and the liquid inlet 11, the liquid outlet flow channel 33 of the coolant-converging-channel 3 is provided with the liquid outlet flow port, the liquid outlet flow port corresponds one-to-one to the liquid outlet 12 arranged on the bottom plate 1, and the cooling flow channel in the bottom plate 1 and the liquid outlet flow channel 33 in the coolant-converging-channel 3 are interconnected through the liquid outlet flow port and the liquid outlet 12.

The male end of the flow guide structure is arranged at the liquid inlet flow port or the liquid outlet flow port of the coolant-converging-channel 3, for example, it can be the upper limit step arranged in the circumferential direction of the liquid inlet flow port or the liquid outlet flow port; the female end of the flow guide structure is arranged at the liquid inlet or the liquid outlet of the bottom plate 1, for example, the liquid inlet or liquid outlet may be provided with a lower limit step at a position corresponding to the upper limit step, the upper limit step and the lower limit step are interspersed with each other and form a mating connection surface, and the upper limit step introduces the cooling medium into the cooling flow channel.

As shown in Fig. 1 to Fig. 4, the battery box further comprises a liquid inlet structure 4 and a liquid outlet structure 5, the liquid inlet structure 4 is interconnected with the liquid inlet flow channel 34, the liquid outlet structure 5 is interconnected with the liquid outlet channel 33, and the liquid inlet structure 4 and the liquid outlet structure 5 are arranged at intervals along the second direction perpendicular to the first direction.

Wherein, the liquid inlet structure 4 and the liquid outlet structure 5 are the box body.

Further, the liquid inlet structure 4 and the liquid outlet structure 5 are connected with external pipelines, which is convenient for the cooling liquid entering into the coolant-converging-channel 3, as well as the cooling liquid after circulation flowing out of the coolant-converging-channel 3.

Further, the frame 2 is provided with an avoidance area 8 to avoid the liquid inlet structure 4 and the liquid outlet structure 5, and the avoidance area 8 is interconnected with the mounting slot 7.

Wherein, the avoidance area 8 is for the placement of the inlet structure 4 and the liquid outlet structure 5, so that the liquid inlet structure 4 and the liquid outlet structure 5 are located inside of the avoidance area 8, and the avoidance area 8 plays a protective role for the liquid inlet structure 4 and the liquid outlet structure 5, reducing the damage caused to the liquid inlet structure 4 and the liquid outlet structure 5 in the process of installation or handling.

In this embodiment, the bottom plate 1 comprises body 13 and plug 14, the body 13 is provided with a cooling flow channel, and the plug 14 is arranged at both ends along the first direction of the body 13.

Wherein, the plug 14 blocks the cooling flow channel inside the bottom plate 1, which can prevent the leakage of cooling liquid from occurring in the bottom plate 1 itself, thereby improving the protection effect of the battery.

Specifically, the plug 14 has an extension part that extends into the cooling flow channel and a stop part connected with the body 13, and the extension part and the stop part cooperate in a T-shaped structure. The extension part extends into the inside of the cooling flow channel to achieve a good plugging effect, thus avoiding leakage.

In this embodiment, the bottom plate 1 is fixed with the frame 2 by welding, and the coolant-converging-channel 3 is welded and fixed with the bottom plate 1.

Specifically, the bottom plate 1 and the frame 2 can be connected by friction stir welding or arc welding, and the body 13 of the bottom plate 1 and the plug 14 are welded by friction stir welding, so as to increase the sealing effect of the stability of the connection.

Further, the coolant-converging-channel 3, the liquid inlet structure 4 and the liquid outlet structure 5 are connected as a whole by laser welding or arc welding, and then the whole is connected with the bottom plate 1 by welding, so as to increase the sealing effect of the stability of the connection.

Different from the above-mentioned embodiments, in a preferred embodiment of the present application, at least a part of the coolant-converging-channel 3 along the first direction is located outside the flange 23.

Specifically, one end of the mounting plate 21 far away from the bottom plate 1 has a flange 23, the first side plate 22 extends to the outside of the flange 23 along the first direction, and at least a part of the coolant-converging-channel 3 is located outside the flange 23.

The application provides a battery pack based on the above description, and the battery pack comprises a battery box in any of the above-mentioned embodiments. Battery is provided in the battery box, and the embodiment of the application does not limit the specific embodiments of the battery being arranged in the battery box.

From the above description, it can be seen that the embodiment of the present application achieves the following technical effects: 1. by arranging the coolant-converging-channel 3 outside of the installation cavity 6, when the cooling liquid leakage occurs in the coolant-converging-channel 3, the leaking cooling liquid is located outside the installation cavity 6, and the leaking cooling liquid does not affect the battery located inside the installation cavity 6, so that the protection of the battery is realized. 2. the mounting slot 7 formed based on the mounting plate 21 and the bottom plate 1 can protect the coolant-converging-channel 3, so as to reduce the damage caused to the coolant-converging-channel 3 in the process of installation or handling, reducing the leakage risk caused by collision.

As shown in Fig. 5-Fig. 8, the embodiment provides a battery box, the battery box comprises box body 100, coolant-converging-channel 400 and flow guide structure, wherein the box body 100 includes the bottom plate 110 and the frame, the bottom plate 110 and the frame together form the installation cavity, the installation cavity is used to install the battery module or the battery cell pack, and the battery module can be set to multiple, the bottom plate 110 is provided with a number of parallel cooling flow channels, the cooling flow channels are used for circulating cooling medium, and the cooling medium cools the battery module.

Optionally, the frame body is provided with a liquid inlet structure 200 and a liquid outlet structure 300, the coolant-converging-channel 400 is installed on the bottom plate 110, a coolant-converging-channel cavity is formed inside the coolant-converging-channel 400; the coolant-converging-channel cavity is divided into a liquid inlet flow channel 410 and a liquid outlet flow channel 420, one end of the liquid inlet flow channel 410 is interconnected with the liquid inlet structure 200, another end of the liquid inlet flow channel 410 is interconnected with liquid inlets 111 of several parallel cooling flow channels; one end of the liquid outlet flow channel 420 is interconnected with the liquid outlets 112 of several parallel cooling flow channels, and another end of the liquid outlet flow channel 420 is interconnected with the liquid outlet structure 300, thereby the cooling medium can enter into the liquid inlet flow channel 410 from the liquid inlet structure 200, then the diverted cooling medium in the liquid inlet flow channel 410 enters into the parallel cooling channel respectively, and after circulating through the cooling flow channel, the cooling medium enters into the liquid outlet flow channel 420, and then flows out of the liquid outlet structure 300 together.

Further, the flow guide structure includes male end and female end, the male end is arranged on the coolant-converging-channel 400, and the female end is arranged on the bottom plate 110; the male end is matching connected to the female end, and the flow guide structure allows the cooling medium to enter evenly into several parallel cooling flow channels. Thus, through the setting of the coolant-converging-channel 400 and the flow guide structure, the even diversion among a plurality of parallel cooling flow channels is realized, and then the cooling medium in the multiple cooling flow channels can evenly dissipate heat to each part of the battery module respectively, so that the temperature difference inside the same battery module and among a plurality of battery modules is small, and its life consistency is high, so that the lifetime of the battery pack is improved as a whole.

As an optional scheme, the frame body in this embodiment comprises front frame 120, rear frame 130 and two side frames 140, the front frame 120 and the rear frame 130 are respectively arranged at two ends along the length direction of the bottom plate 110, and the two side frames 140 are arranged relative to each other and are respectively arranged at two ends of the bottom plate 110 along the width direction. In some embodiments, the front frame 120, the rear frame 130 and the two side frames 140 can be integrally formed. Of course, in other embodiments, the front frame 120, the rear frame 130 and the two side frames 140 may also be connected by welding.

Further, the bottom plate 110 and the coolant-converging-channel 400 can be made of profiles. For example, in this embodiment, the bottom plate 110 is made of two splicing profiles, two cavities are formed inside each profile, and the two ends of the cavities are blocked, so that each cavity constitutes a closed cooling flow channel, that is, four cooling flow channels are arranged inside the bottom plate 110, each cooling flow channel comprises an outflow channel and a reflow channel, the outflow channel and the reflow channel are both arranged along the length direction of the bottom plate 110; one end of the outflow channel is liquid inlet 111, this liquid inlet 111 is interconnected with the liquid inlet flow channel 410; one end of the reflow channel is liquid outlet 112, this liquid outlet 112 is interconnected with the liquid outlet flow channel 420, and another end of the outflow channel and another end of the reflow channel are interconnected with each other at one end away from the coolant-converging-channel 400, so that the outflow channel and the reflow channel can form a complete cooling circuit. Similarly, inside of the coolant-converging-channel 400 made by profile is also provided with two cavities, which constitute the liquid inlet flow channel 410 and the liquid outlet flow channel 420 respectively, and in order to close the liquid inlet flow channel 410 and the liquid outlet channel 420, the two ends of the cavity are blocked. Exemplary, both ends of the cavity can be sealed with a blocking parts such as rubber block. Of course, other sealing manners can also be selected, and this embodiment is not limited.

As an optional scheme, partition bar 113 is arranged in the cooling flow channel of the bottom plate 110, and the partition bar 113 separates the cooling flow channel into a plurality of sub-flow channels 1131, that is, the outflow channel comprises a plurality of sub-flow channels 1131, and the reflow channel comprises the same number of sub-flow channel 1131 therewith, so that the cooling medium can continue to divert after entering the cooling flow channel through the liquid inlet flow port 411, and the uniformity of the diversion is further improved, which is conducive to the even heat dissipation of the battery module.

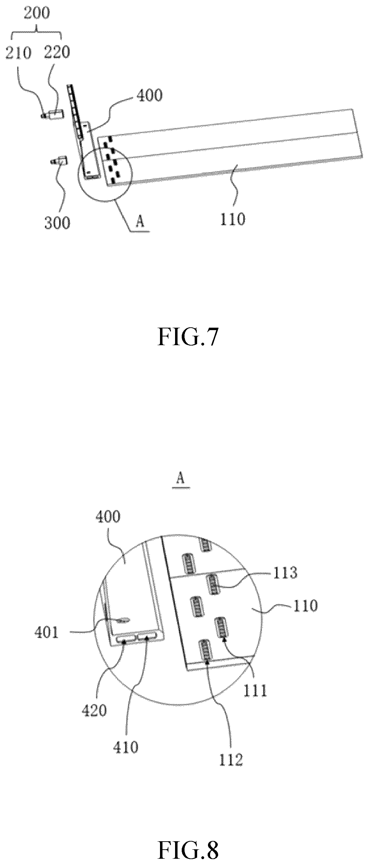

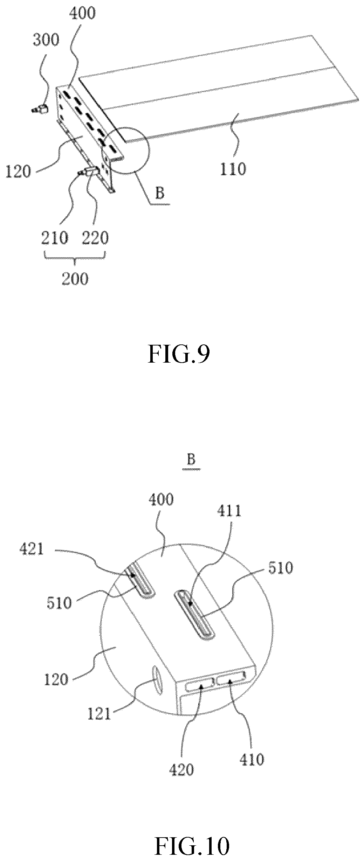

Continuing to refer to Fig. 9 and Fig. 10, the coolant-converging-channel 400 is arranged inside of the installation cavity, the the coolant-converging-channel 400 is arranged close to the front frame 120, the front frame 120 is provided with two first through holes 121, the liquid inlet structure 200 and the liquid outlet structure 300 pass through two first through holes 121 respectively, so that the liquid inlet structure 200 can interconnect with the liquid inlet flow channel 410 of the coolant-converging-channel 400, and the liquid outlet structure 300 can interconnect with the liquid outlet flow channel 420 of the coolant-converging-channel 400. Optionally, referring to Fig. 8, the upper wall surface of the coolant-converging-channel 400 is provided with two second through holes 401, and one second through hole 401 is interconnected with the liquid inlet structure 200 and the liquid inlet flow channel 410, and the other second through hole 401 is interconnected with the liquid outlet structure 300 and the liquid outlet flow channel 420.

Exemplarily, the bottom wall of the coolant-converging-channel 400 is provided with four liquid inlet flow ports 411 and four liquid outlet flow ports 421; four liquid inlet flow ports 411 and four liquid outlet flow ports 421 are arranged alternately, the four liquid inlet flow ports 411 are all interconnected with the liquid inlet flow channel 410, the four liquid outlet flow ports 421 are all interconnected with the liquid outlet flow channel 420, and the liquid inlet flow ports 411, as well as the liquid outlet flow ports 421 corresponds one-to-one to the cooling flow channel; the liquid inlet flow ports 411 and the liquid outlet flow ports 421 are arranged alternately, each liquid inlet flow port 411 is interconnected with the liquid inlet 111 of one cooling flow channel, and each liquid outlet flow port 421 is interconnected with the liquid outlet 112 of the corresponding cooling flow channel.

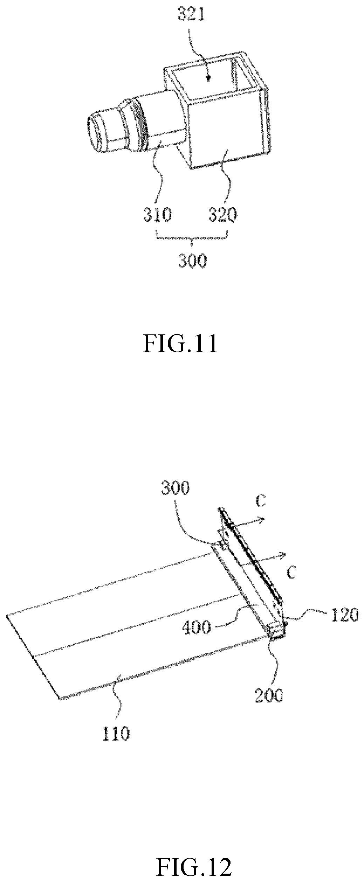

Referring to Fig. 9 and Fig. 11, the liquid inlet structure 200 in this embodiment comprises a water inlet 210 and a first flow collection block 220, the water inlet 210 penetrates through the first through hole 121 of the front frame 120, the first flow collection block 220 is connected to the coolant-converging-channel 400, one end of the first collection block 220 is interconnected with the water inlet 210, another end of the first flow collection block 220 is interconnected with the liquid inlet flow channel 410 through one of the second through holes 401; inside of the first collection block 220 forms a first flow collection cavity, and when the cooling medium enters the liquid inlet flow channel 410 of the coolant-converging-channel 400 through the liquid inlet structure 200, the first flow collection block can play the role of buffering the turbulent part of the cooling medium, reducing its flow velocity, so that when the coolant-converging-channel 400 can be more even upon flow diversion, and is conducive to even heat dissipation. Similarly, the liquid outlet structure 300 in this embodiment comprises a water outlet 310 and a second flow collection block 320, the water outlet 310 penetrates through the second through hole 121 of the front frame 120, the second flow collection block 320 is connected to the coolant-converging-channel 400, one end of the second collection block 320 is interconnected with the water outlet 310, another end of the second flow collection block 320 is interconnected with the liquid outlet flow channel 420 through one of the second through holes 401; inside of the second collection block 320 forms a second flow collection cavity, and when the cooling medium enters the the liquid outlet structure 300 of the coolant-converging-channel 400 through liquid outlet flow channel 420, the second flow collection cavity 321 can also play the role of buffering the turbulent part of the cooling medium, reducing its flow velocity, as a result, the heat exchange time is extended and the cooling effect is improved.

Further, the volume of the coolant-converging-channel cavity in the coolant-converging-channel 400 is V1, that is, the total volume of the cooling medium that can be accommodated in the liquid inlet flow channel 410 and the liquid outlet flow channel 420 is V1; the total volume of the four parallel cooling flow channels is V2, that is, the total volume of the cooling medium that can be accommodated in the four cooling flow channels in total is V2, and the value range of V 1/V2 is 0.05-0.6, for example, the value of V1/V2 can be 0.05, 0.1, 0.2, 0.3, 0.4, 0.5, or 0.6 and so on. Thus, it can be ensured that there is sufficient cooling medium in the coolant-converging-channel cavity of the coolant-converging-channel 400 for flow diversion into the four cooling channels.

As an optional scheme, referring to Fig. 12-Fig. 15, the male end of the flow guide structure in this embodiment is set as the upper limit step 510, and the female end of the flow guide structure is set as the lower limit step 520; the upper limit step 510 is oval in shape as a whole, and is arranged in a circumferential direction at the edge of the liquid inlet flow port 411 and the liquid outlet flow port 421; the lower limit step 520 is oval in shape as a whole, and is arranged in a circumferential direction at the liquid inlet 111 and the liquid outlet 112 of the cooling flow channel in the bottom plate 110. The upper limit step 510 and the lower limit step 520 are interspersed with each other to form a mating connection surface 5101; the upper limit step 510 can introduce the cooling medium into the cooling flow channel, since the upper limit step 510 extends the length of the liquid inlet flow port 411 or the liquid outlet flow port 421, thereby playing the role of flow guiding for the cooling medium, and is conducive to making the even diversion. Of course, in addition to the effect of flow guiding, the setting of the upper limit step 510 and the lower limit step 520 is also conducive to positioning the coolant-converging-channel 400, and is convenient to align the position of the liquid inlet flow port 411 of the coolant-converging-channel 400 and the liquid inlet 111 of the cooling flow channel, as well as the position of the liquid outlet flow port 421 of the coolant-converging-channel 400 and the liquid outlet 112 of the cooling flow channel during assembly, so as to avoid the reduction of the cross-sectional area of the cooling medium circulation caused by mutual blocking, which then cause uneven diversion. In addition, the structure of the flow guide structure is simple, the processing is easy, the difficulty of production and manufacturing is low, the production efficiency is high, and the cost is reduced to a certain extent.

Optionally, the upper limit step 510 comprises a first vertical plane, a first horizontal plane and a second vertical plane; along the width direction of the lower limit step 520, the mating connecting surface 5101 is formed between the first horizontal plane and the lower limit step 520, a first gap a is provided between the first vertical plane and the lower limit step 520, a second gap b is provided between the second vertical surface and the lower limit step 520, wherein the first gap a is located on one side of the mating connecting surface 5101, and the second gap b is positioned at the other side of the mating connecting surface 5101, and through the arrangement of the first gap a and the second gap b, the production tolerance of the upper limit step 510 and the lower limit step 520 can be compensated, so that the upper limit step 510 and the lower limit step 520 can be conveniently matched and installed. For example, the value range of the first gap a and the second gap b is 0.05mm~6mm, and the value range of the width of the mating connecting surface 5101 is 0.5mm~12mm. For example, the first gap a and the second gap b can be set as 0.05mm, 0.1mm, 0.5mm, 0.8mm, 1mm, 2mm, 3mm, 4mm, 5mm, or 6mm, and so on. The width of the mating connection surface 5101 can be set as 0.5mm, 0.8mm, 1mm, 2mm, 3mm, 4mm, 5mm, 6mm, 7mm, 8mm, 9mm, 10mm, 11mm or 12mm, etc., which will not be listed one by one here.

Further, along the height direction of the bottom plate 110, there is a third gap c between the partition bar 113 and the end of the upper limit step 510; the setting of the third gap c can ensure that the first horizontal plane of the upper limit step 510 and the lower limit step 520 are connected against each other to form the mating connecting surface 5101, and the upper limit step 510 and the lower limit step 520 are closely attached without gaps, which plays the role of blocking the cooling medium, and the cooling medium is avoided from overflowing in large quantities between the two, so that the sealing property is good. For example, the value range of the third gap c is 0.05mm~10mm. For example, the third gap c can be set as 0.05mm, 0.1mm, 0.5mm, 0.8mm, 1mm, 2mm, 3mm, 4mm, 5mm, 6mm, 7mm, 8mm, 9mm or 10mm etc., which will not be listed one by one here.

The embodiment also provides a battery pack, comprising a plurality of battery modules and above-mentioned battery box. The battery box comprises a box body 100, a coolant-converging-channel 400 and a flow guide structure, the bottom plate 110 of the box body 100 and the frame are enclosed to form an installation cavity, a plurality of battery modules are arranged in the installation cavity, a plurality of parallel cooling flow channels are arranged in the bottom plate 110, the cooling flow channels are used for the circulation of cooling medium, and the cooling medium can cool down a plurality of battery modules. The coolant-converging-channel 400 evenly divert the cooling medium to the parallel cooling flow channels, so that the battery module in the battery pack is evenly cooled, and finally the temperature difference of the plurality of battery modules in the battery pack is small, the life consistency is high, and the lifetime of the battery pack is improved as a whole.

The male end and the female end of the flow guide structure are interspersed and matched with each other in the form of a stepped form, so as to play a good flow diversion effect, promoting the cooling medium to be more evenly diverted when the liquid inlet flow channel 410 of the coolant-converging-channel 400 enters the liquid inlet 111 of a plurality of parallel cooling flow channels. In addition, the male end and the female end of the flow guide structure also make the positioning between the coolant-converging-channel 400 and the bottom plate 110 accurate, avoiding a large amount of cooling medium overflow, and the difficulty of production and manufacturing is low at the same time, which is conducive to improving production efficiency and lower cost.

Based on the above battery box structure, another aspect of the present application also proposes a battery pack, including a plurality of batteries and the battery box in any of the above-mentioned embodiments, and each battery box is suitable for accommodating one or more batteries.

Further preferably, referring to Fig. 24, the battery pack 70 in this preferred embodiment further includes an aerosol fire extinguishing device 71 and a battery management system (located inside the battery pack 70).

In this embodiment, an aerosol fire extinguishing device 71 is arranged on the upper part of the battery pack 70, which detects fire conditions and initiates fire extinguishing in a linked manner through a detection line arrangement. For the battery pack 70, it is further preferred that an insulating layer 701 is provided above the batteries inside the battery pack 70, wherein the insulating layer may be mica slice or other insulating materials such as PP and PI. The aerosol fire extinguishing device 70 is arranged above the insulating layer, and preferably, a buffer layer 702 is also provided between the insulating layer 701 and the aerosol fire extinguishing device 71 (the buffer layer 702 is also made of insulating material and has a certain buffering effect, which buffers the vibrations of aerosol fire extinguishing device 71 during transport for the protection of aerosol fire extinguishing device 71). According to Fig. 24, one side of the aerosol fire extinguishing device 71 is connected to the buffer layer 702, and the other side is connected to the battery pack upper cover (not shown).

According to Fig. 24, the heat-sensitive wire 73 led by the aerosol fire extinguishing device 71 extends over a wide range on the insulation layer 701, and any node of the heat-sensitive wire 73 can detonate the aerosol fire extinguishing device 71 when the temperature exceeds the preset value. In this application, the aerosol fire extinguishing device 71 has a status feedback device inside, and the status feedback device is connected to the battery management system BMS through the connecting line 72, which is used to feedback to the BMS whether the aerosol fire extinguishing device 71 is activated. Specifically, the status feedback device is adapted to provide the battery management system BMS with a status quantity indicating whether the aerosol fire extinguishing device 71 is activated. After obtaining the information to start the aerosol fire extinguishing device 71, the BMS will provide an alarm signal display to prompt the operation and maintenance personnel to check the status.

However, this application is not limited to Fig. 24, and in some other embodiments, the aerosol fire extinguishing device 71 can also be placed on one side of multiple batteries inside the battery pack 70, such as side A shown in Fig. 24. When the aerosol fire extinguishing device 71 is arranged on the side position, the insulating layer is provided between the sides of the multiple batteries and the aerosol fire extinguishing device 71, and the aerosol fire extinguishing device 71 is fixed by a buffer bracket. Specifically, the battery pack 70 includes battery accommodation space and electrical component accommodation space, with a mounting beam in between; the aerosol fire extinguishing device 71 can be connected to the insulation layer through the mounting beam in the battery pack 70. It can be understood that, according to the actual structure of the battery pack, those skilled in the art can adjust the fixing method of the aerosol fire extinguishing device 71 in detail.

Another aspect of this application also proposes an energy storage container, comprising a battery rack, the battery rack is divided into a plurality of independent units for accommodating battery packs. Illustratively, these battery packs may be the battery packs in any of the above embodiments, and may also include the battery boxes in any of the previous embodiments of this application.

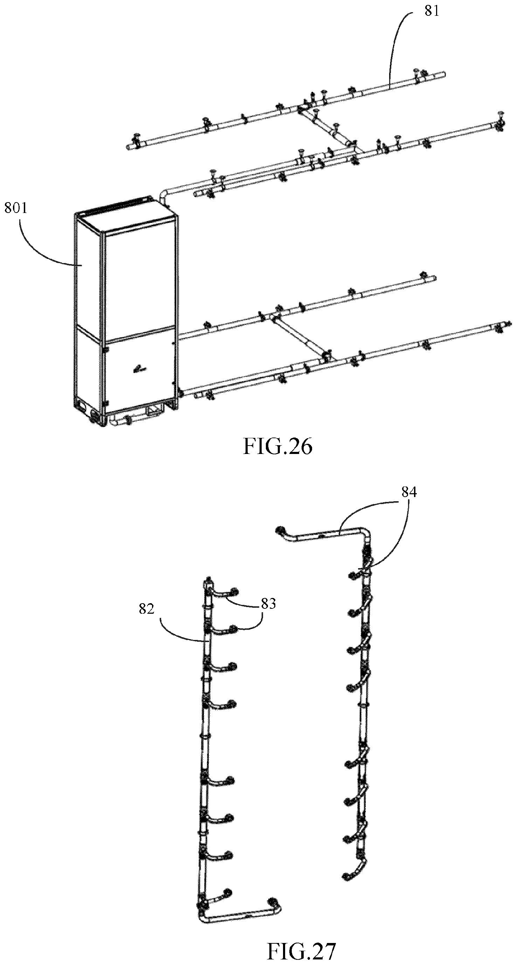

In a preferred embodiment of the present application, a preferred energy storage container is proposed with reference to Fig. 25 to Fig. 27, in which a three-stage cooling pipeline design is provided to facilitate thermal management. According to Fig. 25, the energy storage container (in order to illustrate the three-level pipeline more clearly, the structure of the battery rack is omitted in Fig. 25, and only components related to thermal management are retained) includes a chiller 801, primary pipeline 81, secondary pipeline 82 and tertiary pipeline 83. On this basis, Fig. 26 and Fig. 27 respectively show the above structure in a split figure, wherein Fig. 26 shows the chiller 801 and the primary pipeline 81, and Fig. 27 shows the secondary pipeline 82 and tertiary pipeline 83.

Specifically, the primary pipeline 81 is used to connect with the chiller water inlet and the chiller water outlet of the chiller 801, the water inlet pipeline of the primary pipeline 81 transports the cooling liquid to the water inlet pipeline of the secondary pipeline 82, and transports the heated cooling liquid in the water outlet pipeline of the secondary pipeline 82 back to the water outlet pipeline of the primary pipeline 81, which finally returns to the chiller 801.

Further preferably, the primary pipeline 81 is connected to the chiller water inlet and the chiller water outlet of the chiller 801 through a chuck type connection, and multiple sections of the primary pipeline 81 are connected to each other through a chuck type connection (relying on fasteners or links); pipe connections are realized through mechanical structures, thereby replacing welding technology. This connection method avoids the problem of pipelines being too long and difficult to install, allowing quick disassembly and assembly.

In this embodiment, the energy storage container includes multiple battery clusters, the secondary pipeline 82 is used as the cooling liquid inlet and outlet pipeline for the battery cluster, the water inlet pipeline and water outlet pipeline of the secondary pipeline 82 are respectively arranged on the two sides of the battery clusters, making sure the smooth flow in and out of the battery cluster. In this embodiment, it is preferable to adopt a same-process flow equalization design to ensure the uniformity of water flow and improve the efficiency of the battery system pipeline. According to Fig. 25, the battery cluster can be understood as a cluster of battery packs formed by multiple battery packs in the space formed by the secondary pipeline 82 and the primary pipeline 81.

Furthermore, the tertiary pipeline 83 is specifically the inlet and outlet pipeline of the battery pack, and the specific number of the tertiary pipeline 83 can correspond to the number of battery packs. The tertiary pipeline 83 also adopts the same-process flow equalization design to ensure uniform distribution of water flow inside the battery pack and improve the consistency of battery cooling water flow. In this embodiment, the same-process flow equalization design can be understood as that in each cluster of battery packs, the distance of the pipelines through which the cooling liquid flows through each battery pack is the same. The tertiary pipeline 83 is interconnected with the cooling flow channel of the battery box in each connected battery pack, thereby delivering cooling liquid to the battery pack to achieve a cooling effect.

For ease of understanding, in this embodiment, the chiller water inlet and the chiller water outlet of the chiller are both below the unit; taking the water inlet pipeline of the primary pipeline 81 at the bottom, and the water outlet of the primary pipeline 81 at the top as an example, the cooling liquid enters the water inlet pipeline of the secondary pipeline 82 through the primary pipeline 81 located below, sequentially flows through the water inlet pipeline of the tertiary pipeline 83 of the lowest battery pack into that battery pack, and flows from the water outlet pipeline of the tertiary pipeline 83 corresponding to the battery pack into the water outlet pipeline of the secondary pipeline 82, and then merge through the secondary pipeline 82 to the primary pipeline 81 above the battery cluster.

Preferably, in this embodiment, referring to Fig. 27, the connection part 84 of the pipeline adopts a corrugated pipe section design, and the corrugated pipe section design is a pipe with a regular wavy shape, which is softer than a straight pipe and solves the stress problem at the connection point, enhancing connection stability and durability. In this embodiment, the corrugated pipe section design can be arranged at any position of the primary pipeline 81, the secondary pipeline 82, and the tertiary pipeline 83, especially at the connection between the pipelines.

A preferred embodiment of the energy storage container of the present application will be further described in detail below with reference to Fig. 16~Fig. 23. Regarding problem in the related technology that, when a fire breaks out in a battery pack in a battery compartment, it is difficult for the fire-stopping system between the battery packs to simultaneously prevent the spread of fire and relieve pressure, and thermal runaway of a single battery pack in the battery compartment will affect other battery packs and increase losses, as shown in Fig. 16, this application provides an energy storage container, which includes: a battery rack 61 and a fire-resisting wall assembly 63; wherein,

Multiple battery clusters 62 can be installed in the battery rack 61; it should be noted that one battery cluster 62 refers to a battery module formed by multiple battery packs connected in series and/or in parallel. The fire-resisting wall assembly 63 is disposed inside the battery rack 61 and is arranged longitudinally and transversely along the battery rack 61 to divide the battery rack 61 into a plurality of independent units for accommodating the battery pack 621, and the fire-resisting wall assembly 63 is also provided with a fire-resisting and pressure relief unit that can form a cold wall effect and a container wall effect.

It should be noted that in this application, for the convenience of viewing, the battery pack 621 in the battery cluster 62 shown in Fig. 16 is in an uninstalled state.

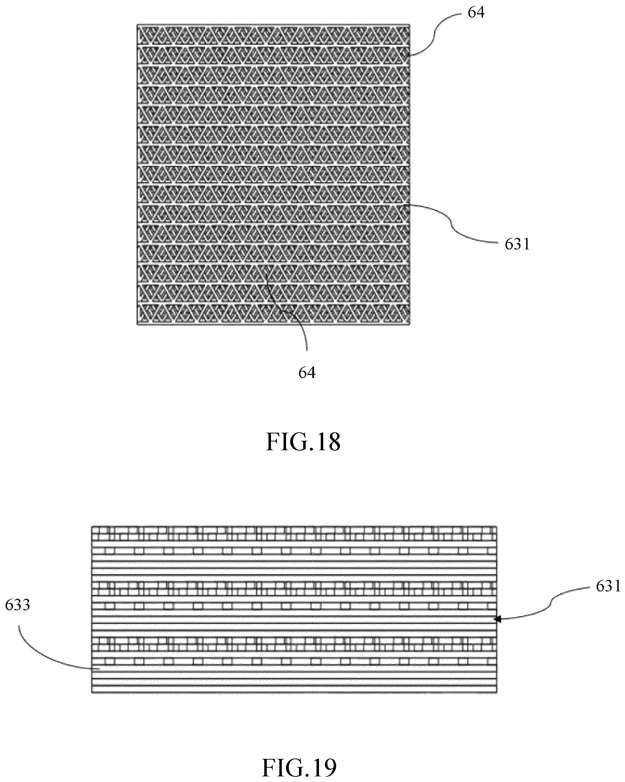

Preferably, as shown in Fig. 18, the fire-resisting and pressure-relief unit includes a plurality of micropores 64, the micropores 64 are provided on the fire-resisting wall assembly 63 and are through holes, and the projected area of each micropore 64 in any plane perpendicular to the through hole direction of the micropore 64 is less than or equal to 1mm².

It is worth mentioning that the micropores 64 prevent the flame from spreading by utilizing the cold wall effect and the container wall effect. Wherein, the cold wall effect is achieved because the micropores 64 expand the contact area between the fine flame and the fire-resisting wall assembly 63 which increases the thermal conductivity of the material, increasing the heat loss of the flame, thereby causing the flame temperature to drop to below its quenching temperature to achieve the purpose of preventing the fire. The principle of the container wall effect is because combustion is stimulated by external energy (thermal energy, radiation energy, electrical energy, chemical reaction energy, etc.), and the molecular bonds are destroyed to produce active molecules, and the active molecules split into active free radicals when chemical reactions occur, active free radicals collide with other molecules to generate new products (combustion), and new free radicals are also generated to continue to react with other molecules. The micropores 64 serve as flame suppression units, and the size of the micropores 64 of the fire-resisting wall assembly 63 is relatively smaller, which reduces the probability of collision between free radicals and reaction molecules, while the collision of free radicals with the wall surface of the fire-resisting wall assembly 63 increases, which promotes the reduction of free radical reactions. Therefore, after the channel size area of the micropores 64 is reduced to a certain extent, the purpose of preventing the spread of flame can be achieved. When the projected area of the micropores 64 of the fire-resisting wall assembly 63 in any plane perpendicular to the through hole direction of the micropores 64 is set as less than or equal to 1mm², the effect of preventing the flame from spreading to the adjacent battery pack 621 can be achieved. At the same time, as shown in Fig. 16 and Fig. 17, a large number of micropores 64 are arranged on the fire-resisting wall assembly 63, and the micropores 64 can promptly relieve pressure in the storage space surrounded by the fire-resisting wall assembly 63.

Specifically, the fire-resisting wall assembly 63 includes: a fire-resisting wall 631 between battery clusters and a fire-resisting wall 632 between battery packs; wherein,
the fire-resisting wall 631 between battery clusters is used to be set up between two adjacent battery clusters 62. The fire-resisting wall 632 between battery packs is used to be installed between two adjacent battery packs 621 in any battery cluster 62; wherein, the fire-resisting wall 631 between battery clusters and the fire-resisting wall 632 between battery packs both include a plurality of fire-resisting plates 633 stacked in the thickness direction, and each of the fire-resisting plates 633 is provided with a plurality of through holes 6331, the through holes 6331 between the multiple different fire-resisting plates 633 stacked in the thickness direction are at least partially offset, so that the through holes 6331 between the different fire-resisting plates 633 stacked in the thickness direction overlap to each other to form the micropores 64.

It can be understood that, as shown in Fig. 16, Fig. 17, Fig. 18 and Fig. 19, in order to reduce process difficulty and achieve mass production, it is assumed that the fire-resisting wall 631 between battery clusters and the fire-resisting wall 632 between battery packs both include only one fire-resisting plate 633. It is then undoubtedly a huge challenge for process production to open multiple micropores 64 on a fire-resisting plate 633 while taking into account the strength requirements of the fire-resisting plate 633. As shown in Fig. 17 and Fig. 19 of this application, by setting that the fire-resisting wall 631 between the battery clusters and the fire-resisting wall 632 between the battery packs both include multiple fire-resisting plates 633 stacked in the thickness direction, each fire-resisting plate 633 is provided with a plurality of through holes 6331, and the projected area of each through hole 6331 in any plane perpendicular to the through hole direction of the through hole 6331 is greater than the projected area of the micropore 4 in any plane perpendicular to the through hole direction of the micropore 4, it further reduces the manufacturing difficulty of a single fire-resisting plate 633. Then, multiple fire-resisting plates 633 are stacked, in addition, the through holes 6331 on different fire-resisting plates 633 are staggered, and the through holes 6331 are superimposed on each other to form micropores 64. Optionally, the shape of the through hole 6331 is triangular. Of course, practitioners can change the shape of the through hole 6331 as needed.

Preferably, the fire-resisting plate 633 may be made of polycrystalline mullite ceramic fiber board. The main crystal phase of polycrystalline mullite ceramic fiber board is a single mullite phase, which is the best thermal stability among polycrystalline alumina fibers used at high temperatures, and the use temperature is above 1,400°C, which is enough to be applied in battery packs 621 to isolate flames when a fire occurs.

In some specific embodiments, a battery cluster 62 includes eight battery packs 621 interval spaced up and down, and as shown in Fig. 16, in the embodiment provided by this application, the battery compartment includes ten battery clusters 62, and the front and back direction of two battery clusters 62 form a row in the figure. An inter-battery cluster fire-resisting wall 631 is provided between adjacent battery clusters 62. Between adjacent battery packs 621 (that is, battery packs 621 arranged at upper and lower intervals in the same cluster), there is an inter-battery pack fire-resisting wall 632.

In view of the fact that if a fire occurs, the intensity of the fire in an entire battery cluster 62 is different from that of a fire in a single battery pack 62, in this application, the thickness of the fire-resisting wall 631 between battery clusters is greater than the thickness of the fire-resisting wall 632 between battery packs. Specifically, the thickness of the fire-resisting wall 631 between battery clusters is between 10 mm and 100 mm. The thickness of the fire-resisting wall 632 between battery packs is between 5-100mm.

This application provides an optional embodiment in which the thickness of the fire-resisting wall 632 between battery packs is 24mm, and the thickness of the fire-resisting wall 631 between battery clusters is 48mm.

Optionally, the fire-resisting wall 631 between battery clusters includes: 1-100 layers of the stacked fire-resisting plates 633, and the fire-resisting wall 632 between battery packs includes: 1-50 layers of the stacked fire-resisting plates 633, wherein each fire-resisting plate 633 includes a layer of polycrystalline mullite ceramic fiber board. For sure, the projected area of the micropore 64 in any plane perpendicular to the through hole direction of the micropore 64 will become smaller as the number of stacked layers of the fire-resisting plate 633 increases. The projected area of the micropores 64 on the fire-resisting wall 631 between battery clusters in any plane perpendicular to the through hole direction of the micropores 64 will be smaller than the projected area of the micropores 64 on the fire-resisting wall 632 between battery packs in any plane perpendicular to the through hole direction of the micropores 64.

In some embodiments, the fire-resisting wall 631 between battery clusters includes: twenty four layers of fire-resisting plates 633 and the fire-resisting wall 632 between battery packs includes twelve layers of fire-resisting plates 633.

In some preferred embodiments, the projected area of each through hole 6331 on the fire-resisting plate 633 in any plane perpendicular to the through hole direction of the through hole 6331 is between 5-100mm², and multiple fire-resisting plates 633 are stacked on each other, so that the through holes 6331 on the multiple fire-resisting plates 633 are superimposed on each other in the through hole direction of the through holes 6331 to form micropores 64.

Further, as shown in Fig. 16, Fig. 20, Fig. 21, Fig. 22, and Fig. 23, the battery rack 61 includes a frame 611, a cluster rack 612 and a plurality of clamping slots 6121. The cluster rack 612 is provided inside the frame 611, the cluster frame 612 is used to install the battery pack 621, and a plurality of the clamping slots 6121 are respectively provided on the cluster frame 612. The fire-resisting wall assembly 63 is clamped on the cluster frame 612 through the clamping slot 6121. The above-described clamping slot 6121 is used to engage with the fire-resisting wall between battery packs 632 and the fire-resisting wall between battery clusters 631, so that there is a fire-resisting wall between battery pack 632 between every two adjacent battery packs 621, and the fire-resisting wall between battery clusters 631 is provided between any two adjacent battery clusters 62.

Specifically, as shown in Fig. 16, the frame 611 includes eight steel fixed beams and four square steel support columns. The cluster frame 612 includes a plurality of support columns, battery pack mounting brackets and clamping slots 6121.

It can be understood that the cluster frame 612 is not only undertaking the function of installing the battery pack 621, but also having a clamping slot 6121 provided thereon so that the fire-resisting wall between battery cluster 631 and the fire-resisting wall between battery packs 632 can be detachably installed on the cluster frame 612. This is to facilitate practitioners to achieve quick disassembly and repair.

On the other hand, this application also provides an energy storage container, including the above-mentioned energy storage container, and a battery pack 621 or battery cluster 62 located in the energy storage container.

To sum up, this application uses micropores on the fire-resisting wall as a flame suppression unit, the micropores on the fire-resisting wall prevent the flame from passing through the fire-resisting wall based on the cold wall effect and the container wall effect, that is, the spread of the flame is contained; meanwhile, multiple micropores on the fire-resisting wall will also serve as pressure relief holes, and a large amount of gas generated by the fire can be discharged through the micropores to prevent the air pressure in the battery compartment from being too high and causing more serious safety consequences.

The basic concepts have been described above. Obviously, for those skilled in the art, the above application disclosures are only examples and do not constitute limitations to the present application. Although not explicitly stated herein, those skilled in the art may make various modifications, improvements, and corrections to this application. Such modifications, improvements and corrections are suggested in this application, so such modifications, improvements and corrections still fall within the spirit and scope of the exemplary embodiments of this application.

Meanwhile, the present application uses specific words to describe the embodiments of the present application. For example, "one embodiment", "an embodiment", and/or "some embodiments" refer to a certain feature, structure or characteristic related to at least one embodiment of the present application. Therefore, it should be emphasized and noted that two or more references to "one embodiment" or "an embodiment" or "an alternative embodiment" in different places in this specification do not necessarily refer to the same embodiment. In addition, certain features, structures or characteristics of one or more embodiments of the present application may be properly combined.

In the same way, it should be noted that in order to simplify the expression disclosed in the present application and help the understanding of one or more embodiments of the invention, in the foregoing description of the embodiments of the present application, sometimes multiple features are combined into one embodiment, drawings or descriptions thereof. However, this method of disclosure does not imply that the subject matter of the application requires more features than are recited in the claims. Indeed, embodiment features are less than all features of a single foregoing disclosed embodiment.

In some embodiments, numbers describing the quantity of components and attributes are used, it should be understood that such numbers used in the description of the embodiments use the modifiers "about", "approximately" or "substantially" in some examples. Unless otherwise stated, "about", "approximately" or "substantially" indicates that the stated figure allows for a variation of ±20%. Accordingly, in some embodiments, the numerical parameters used in the specification and claims are approximations that can vary depending upon the desired characteristics of individual embodiments. In some embodiments, numerical parameters should take into account the specified significant digits and adopt the general digit reservation method. Although the numerical ranges and parameters used in some embodiments of the present application to confirm the breadth of the scope are approximate values, in specific embodiments, such numerical values are set as precisely as practicable.

Although the present application has been described with reference to the current specific embodiments, those of ordinary skill in the art should recognize that the above embodiments are only used to illustrate the present application, and various equivalent changes or substitutions can also be made without departing from the spirit of the present application, therefore, as long as the changes and modifications to the above-mentioned embodiments are within the spirit of the present application, they will all fall within the scope of the claims of the present application.

## Claims

1. A battery box, **characterized by** comprising:
a bottom plate (1) and a frame (2), the bottom plate (1) and the frame (2) together form an installation cavity (6), the bottom plate (1) is provided with a number of cooling flow channels, and the cooling flow channels are used for circulating cooling medium;
a coolant-converging-channel (3), at least one end of the bottom plate (1) is provided with the coolant-converging-channel (3), and the coolant-converging-channel (3) connects to the bottom plate (1) and is interconnected to the cooling flow channels.

2. The battery box according to claim 1, **characterized in that**, when the coolant-converging-channel (3) is located outside the installation cavity (6), the frame (2) includes a plurality of side plates and at least one mounting plate (21), a mounting slot (7) is formed between the mounting plate (21) and the bottom plate (1), and at least part of the coolant-converging-channel (3) is accommodated inside of the mounting slot (7).

3. The battery box according to claim 2, **characterized in that**, the mounting plate (21) includes a flat plate section (211) and a bent plate section (212) connected in sequence, one end of the bent plate section (212) is connected to the flat plate section (211), another end of the bent plate section (212) extends toward a direction of the installation cavity (6) and is connected to the bottom plate (1), and the mounting slot (7) is formed between the bent plate section (212) and the bottom plate (1).

4. The battery box according to claim 2, **characterized in that**, the plurality of side plates include a first side plate (22) connected to both ends of the mounting plate (21), the coolant-converging-channel (3) extends along a second direction, and a projection of the coolant-converging-channel (3) on the first side plate (22) along the second direction does not exceed the first side plate (22).

5. The battery box according to claim 4, **characterized in that**,
the coolant-converging-channel (3) is accommodated inside of the mounting slot (7); or
along a first direction, part of the coolant-converging-channel (3) is accommodated inside the mounting slot (7), another part of the coolant-converging-channel (3) is exposed outside the mounting slot (7), a portion of the side plate (22) extending along the first direction to outside of the mounting plate (21) forms a redundant portion (221), and the projection area of the coolant-converging-channel (3) along the second direction is within the redundant portion (221).

6. The battery box according to claim 1, **characterized in that**, when the coolant-converging-channel (3) is located outside the installation cavity (6), one end of the frame (2) facing away from the bottom plate (1) has a flange (23) extending toward the outside of the installation cavity (6), and along the direction perpendicular to the bottom plate (1), a projection area of the flange (23) on the bottom plate (1) includes the projection area of the coolant-converging-channel (3) on the bottom plate (1).

7. The battery box according to claim 2, **characterized in that**, the side plates include a first side plate (22) connected to both ends of the mounting plate (21), and a reinforcing plate (222) is provided at one end of the first side plate (22) close to the bottom plate (1), the reinforcing plate (222) is arranged on a side of the first side plate (22) away from the installation cavity (6), a side of the reinforcing plate (222) facing away from the installation cavity (6) protrudes, and a sandwich cavity is formed between the reinforcing plate (222) and the first side plate (22).

8. The battery box according to claim 1~7, **characterized in that**, when the coolant-converging-channel (3) is located outside the installation cavity (6),
the coolant-converging-channel (3) is provided at one end of the bottom plate (1), and the bottom plate (1) also has a liquid inlet (11) and a liquid outlet (12) interconnected to the cooling flow channel, the coolant-converging-channel (3) has a liquid inlet flow channel (34) and a liquid outlet flow channel (33), the liquid inlet flow channel (34) is interconnected with the liquid inlet (11), and the liquid outlet flow channel (33) is interconnected with the liquid outlet (12); or
the coolant-converging-channel (3) is provided at both ends of the bottom plate (1), the coolant-converging-channel (3) located on one end includes a liquid inlet flow channel (34) interconnected to a liquid inlet (11) of the cooling flow channel, and the coolant-converging-channel (3) located at another end includes a liquid outlet flow channel (33) interconnected to a liquid outlet (12) of the cooling flow channel.

9. The battery box according to claim 1, **characterized by** comprising:
a box body (100), the box body (100) includes the bottom plate (110) and the frame, the bottom plate (110) and the frame together form the installation cavity, the bottom plate (110) is provided with a number of parallel cooling flow channels, the cooling flow channels are used for circulating cooling medium, and the frame is provided with a liquid inlet structure (200) and a liquid outlet structure (300);
the coolant-converging-channel (400), the coolant-converging-channel (400) is installed on the bottom plate (110), a coolant-converging-channel cavity is formed inside the coolant-converging-channel (400), the coolant-converging-channel cavity is divided into a liquid inlet flow channel (410) and a liquid outlet flow channel (420), one end of the liquid inlet flow channel (410) is interconnected with the liquid inlet structure (200), another end of the liquid inlet flow channel (410) is interconnected with liquid inlets (111) of several parallel cooling flow channels, one end of the liquid outlet flow channel (420) is interconnected with the liquid outlets (112) of several parallel cooling flow channels, and another end of the liquid outlet flow channel (420) is interconnected with the liquid outlet structure (300);
a flow guide structure, and the flow guide structure includes a male end and a female end, the male end is arranged on the coolant-converging-channel (400), the female end is arranged on the bottom plate (110), the male end is matching connected to the female end, and the flow guide structure allows the cooling medium to enter evenly into several parallel cooling flow channels.

10. The battery box according to claim 9, **characterized in that**, the coolant-converging-channel (400) is located inside the installation cavity, and the liquid inlet structure (200) includes a water inlet (210) and a first flow collecting block (220), the water inlet (210) passes through on the frame, and the first flow collecting block (220) is interconnected with the water inlet (210) and the liquid inlet flow channel (410);
the liquid outlet structure (300) includes a water outlet (310) and a second flow collecting block (320), the water outlet (310) passes through on the frame, and the second flow collecting block (320) is interconnected with the water outlet (310) and the liquid outlet flow channel (420);
a bottom wall of the coolant-converging-channel (400) is provided with a number of liquid inlet flow ports (411) and a number of liquid outlet flow ports (421), several of inlet flow ports (421) are interconnected with the liquid inlet flow channel (410), several of the liquid outlet flow port (421) are interconnected with the liquid outlet flow channel (420), the liquid inlet flow ports (411) and the liquid outlet flow ports (421) correspond to the cooling flow channel one-to-one, each of the liquid inlet flow ports (411) is interconnected with the liquid inlet of one cooling flow channel, and each of the liquid outlet flow ports (421) is interconnected with a corresponding liquid outlet (112) of the cooling flow channel.

11. The battery box according to claim 10, **characterized in that**, an upper limit step (510) is provided in a circumferential direction of the liquid inlet flow port (411) and/or the liquid outlet flow port (421), and the upper limit step (510) constitutes the male end of the flow guide structure;
a lower limit step (520) is recessed on the bottom plate (110) at a position corresponding to the upper limiting step (510), the lower limit step (520) constitutes the female end of the flow guide structure, the upper limit step (520) and the lower limit step (520) intersect with each other and form a mating connection surface (5101), and the upper limiting step (510) introduces the cooling medium into the cooling flow channel.

12. A battery pack, **characterized by** comprising a plurality of batteries and a battery box according to any one of claims 1-11, and the battery box is suitable to accommodate the plurality of batteries.

13. The battery pack according to claim 12, **characterized in that**, the battery pack also includes an aerosol fire extinguishing device and a battery management system, wherein,
the aerosol fire extinguishing device is located above the plurality of batteries or on one side of the plurality of batteries;
the aerosol fire extinguishing device further includes a status feedback device, and the aerosol fire extinguishing device is configured to be connected to the battery management system through the status feedback device, the status feedback device is suitable to provide the battery management system with a status quantity of whether the aerosol fire extinguishing device is activated.

14. An energy storage container, **characterized by** comprising: a battery rack (1), and the battery rack (1) is divided into a plurality of independent units for accommodating the battery pack according to claim 12 or 13.

15. The energy storage container according to claim 14, **characterized by** further comprising a chiller, a primary pipeline, a secondary pipeline and a tertiary pipeline, wherein,
the primary pipeline is connected to a chiller water inlet and a chiller water outlet of the chiller;
the secondary pipeline is connected to the primary pipeline, and the tertiary pipeline is connected between a plurality of battery packs and the secondary pipeline;
the primary pipeline is configured to deliver cooling liquid from the chiller to the secondary pipeline, or to receive cooling liquid from the secondary pipeline and deliver to the chiller, and the secondary pipeline is configured to receive cooling liquid of the primary pipeline and deliver to the tertiary pipeline, or to receive cooling liquid of the tertiary pipeline and deliver to the primary pipeline; and
the tertiary pipeline is interconnected to the cooling flow channel of the battery box in the battery pack, and the tertiary pipeline is configured to receive cooling liquid of the secondary pipeline and deliver to the cooling flow channel, or to receive cooling liquid output from the cooling flow channel and then deliver to the secondary pipeline.

16. The energy storage container according to claim 14, **characterized by** further comprising a fire-resisting wall assembly (3), which is arranged in the battery rack (1) and is cross arranged longitudinally and transversely along the battery rack (1), and the fire-resisting wall assembly (3) is also provided with a fire-resisting and pressure relief unit which can form a cold wall effect and a container wall effect.

17. The energy storage container according to claim 16, **characterized in that**, the battery rack (1) comprises a frame (11), a cluster frame (12) and a plurality of clamping slots (121), the cluster frame (12) is located in the frame (11), the cluster frame (12) is used for installing the battery pack (21), the plurality of the clamping slots (121) are respectively provided on the cluster frame (12), and the fire-resisting wall assembly (3) is clamped on the cluster frame (12) through the clamping slots (121).
